# EUROPÄISCHE PATENTANMELDUNG

(11) **EP 1 079 302 A1**
(43) Veröffentlichungstag der Anmeldung: **28.02.2001**
(21) Anmeldenummer: 99116506.9
(22) Anmeldetag: 23.08.1999
(51) Int. Cl.: G06F 9/445, G06F 9/44

(54) **Verfahren zum Betreiben einer Datenverarbeitungsanlage, Baueinheit und Vermittlungsstelle sowie zugehöriges Computerprogramm**

(71) Anmelder: SIEMENS AKTIENGESELLSCHAFT, 80333 München (DE)
(72) Erfinder: Eder, Michael, Dipl.-Ing., 83564 Soyen (DE); Leutner, Klaus, 82008 Unterhaching (DE); Riedel, Siegmar, 80637 München (DE); Zittinger, Burkhard, 81479 München (DE)

(57) **Zusammenfassung**

Erläutert wird ein Verfahren zum Betreiben einer Datenverarbeitungsanlage, bei dem ein Prozessor die Befehle eines Programmsystems ausführt. Das Programmsystem besteht aus zwei Subsystemen (80, 82). Das erste Subsystem (80) enthält Softwarebausteine (118) für Funktionen, die im Programmsystem und in einer anderen Version dieses Programmsystems gleich auszuführen sind. Das zweite Subsystem (82) enthält Softwarebausteine, die in beiden Programmsystemen unterschiedlich auszuführen sind.

## Beschreibung

Die Erfindung betrifft ein Verfahren zum Betreiben einer Datenverarbeitungsanlage, bei dem mindestens ein Prozessor die Befehle eines Programmsystems ausführt. Das Programmsystem enthält mindestens zwei Subsysteme, die vorgegebene Funktionen der Datenverarbeitungsanlage festlegen und im wesentlichen voneinander unabhängig erstellbar sind. Die Subsysteme enthalten zum Ausführen einer Funktion oder einer Teilfunktion Softwarebausteine.

Unter einem Programmsystem wird im allgemeinen ein Programm aus mehreren Teilen und einer sehr großen Anzahl von Befehlen zur Lösung einer gemeinsamen übergeordneten Aufgabe verstanden. Ein Programmsystem wird z.B. auf einer Anschlußbaugruppe in einer Vermittlungsstelle eingesetzt, um die Signalisierung gemäß verschiedener Übertragungsprotokolle sowie die Verbindungssteuerung zwischen den Teilnehmern zu steuern. Ein anderes Beispiel für ein Programmsystem ist ein Betriebssystem für die Steuerung der Grundfunktionen der Datenverarbeitungsanlage. Ein Programmsystem kann auch ein Anwendungsprogramm sein, wie z.B. ein Textprogramm oder eine Tabellenkalkulation.

Das betreffende Programmsystem ist oft in einer Entwicklungszeit von vielen Jahren entstanden, und kann bis zu mehreren Millionen Befehle enthalten. In Datenverarbeitungsanlagen bzw. Vermittlungseinrichtungen mit mehreren gleichartigen Anschlußbaugruppen ist auch ein gleichzeitiges Abarbeiten von Befehlen eines einzigen oder mehrerer Programmsysteme möglich.

Programmsysteme enthalten gewöhnlich mehrere Subsysteme, die vorgegebene Funktionen der Datenverarbeitungsanlage definieren. Die Subsysteme lassen sich im wesentlichen voneinander unabhängig erstellen, d.h., daß sie einzeln beispielsweise assemblierbar oder compilierbar sind. Die nach dem Compilieren oder Assemblieren entstandenen Befehlsfolgen der Subsysteme werden mit Hilfe eines sogenannten "Link"-Programms zu dem Programmsystem verbunden. Dabei ersetzt das Link-Programm symbolische Adressen durch Adreßwerte des Speichers der Datenverarbeitungsanlage. In einer Vermittlungsstelle gibt es beispielsweise ein Subsystem für die Signalisierung und ein anderes Subsystem für die Verbindungssteuerung. Bei einem Betriebssystem übernimmt beispielsweise ein Speichersubsystem alle Funktionen der Speicherverwaltung. Ein Dateisubsystem enthält Daten, die für das Arbeiten mit den Dateien auf der Datenverarbeitungsanlage benötigt werden.

Ein Subsystem bietet in der Regel mehrere Funktionen an. Eine Funktion in einem Subsystem zur Verbindungssteuerung ist z.B. das Aufbauen der Verbindung zwischen einem rufenden Teilnehmer und einem gerufenen Teilnehmer. Zum Ausführen einer Funktion sind häufig mehrere Tausend Befehle notwendig. Oft werden demzufolge die Funktionen in Teilfunktionen unterteilt. Die Befehle zum Ausführen einer Funktion oder zum Ausführen einer Teilfunktion sind zu einem Softwarebaustein zusammengefaßt. Ein Softwarebaustein ist z.B. eine Befehlsfolge, die an einer Startadresse beginnt und an einer Endadresse endet. Üblich ist das Bereitstellen von Parametern vor dem Ausführen der Befehle des Softwarebausteins. Außerdem können beim Ausführen der Befehle Ergebnisparameter erzeugt werden, die zur weiteren Bearbeitung gespeichert werden.

Es ist schwierig und aufwendig, die Programmsysteme zu erstellen und zu pflegen. So müssen Änderungen im Quelltext oder an anderer Stelle vermerkt werden, um Dritten das Verstehen der Befehlsfolgen zu erleichtern. Eine vollständige und aktuelle Dokumentation der Änderungen läßt sich aber in der Praxis ebensowenig erreichen, wie eine vollständige Dokumentation der Befehlsfolge selbst. Hinzu kommt, daß es von dem Programmsystem oft mehrere Versionen gibt. So gibt es beispielsweise für verschiedene Länder innerhalb einer Entwicklungsstufe des Programmsystems verschiedene Versionen. Die Anzahl der Versionen vervielfacht sich bei einer Weiterentwicklung des Programmsystems. Letztlich werden Weiterentwicklungen des Programmsystems immer schwieriger und aufwendiger, weil eine Vielzahl von Änderungen und gegenseitiger Abhängigkeiten der Subsysteme berücksichtigt werden müssen. Auch ist es bei Programmsystemen aufwendig, Fehler zu korrigieren, weil die Fehlerkorrektur in der Regel für jede Version einzeln durchgeführt werden muß.

Es ist Aufgabe der Erfindung, ein Verfahren anzugeben, das ein einfaches Erstellen und Pflegen des auf der Datenverarbeitungsanlage ausgeführten Programmsystems ermöglicht. Außerdem sollen eine Datenverarbeitungsanlage, eine Baueinheit einer Vermittlungsstelle, eine Vermittlungsstelle sowie ein Computerprogramm angegeben werden, mit denen das erfindungsgemäße Verfahren durchgeführt werden kann.

Die das Verfahren betreffende Aufgabe wird durch ein Verfahren mit den im Patentanspruch 1 angegebenen Verfahrensschritten gelöst. Weiterbildungen sind in den Unteransprüchen angegeben.

Die Erfindung geht von der Erkenntnis aus, daß sich die Subsysteme nicht nur zu einer Aufteilung des Programmsystems nach funktionalen Aspekten eignen, sondern daß die Subsysteme auch dazu verwendet werden können, um Länderanpassungen im Programmsystem vollständig sichtbar zu machen. Deshalb enthält bei der Erfindung das erste Subsystem Softwarebausteine für Funktionen, die im Programmsystem und in einer anderen Version der gleichen Entwicklungsstufe dieses Programmsystems gleich auszuführen sind. Das zweite Subsystem enthält Softwarebausteine für Funktionen, die in beiden Programmsystemen unterschiedlich auszuführen sind (Ländervariante). Durch diese Maßnahme wird erreicht, daß Änderungen, die eine spezielle Version betreffen, im zweiten Subsystem zu programmieren sind, und daß Funktionen, die in mehreren Versionen auf gleiche Art auszuführen sind, im ersten Subsystem enthalten sind. Dies führt dazu, daß Funktionen, die in mehreren Versionen auf gleiche Art auszuführen sind, insgesamt nur einmal programmiert werden müssen, und daß sich Unterschiede zwischen den Versionen auf einfache Art feststellen lassen, indem nur festzustellen ist, welche Funktionen zum zweiten Subsystem gehören. Es ist somit nicht mehr möglich, daß Versionsunterschiede aufgrund einer fehlenden Dokumentation die Weiterentwicklung behindern.

Auch eine Fehlerkorrektur im Programmsystem ist auf einfache Art durchzuführen. So wird zuerst bestimmt, ob sich der Fehler im ersten Subsystem (länderneutraler Teil) oder im zweiten Subsystem (länderspezifischer Teil) befindet. Befindet sich der Fehler im ersten Subsystem, so kann die Fehlerbeseitigung zentral für alle Programmversionen der gleichen Entwicklungsstufe auf die gleiche Art erfolgen. Der Regelfall ist, daß das erste Subsystem bedeutend größer als das zweite Subsystem ist. Nur wenn sich der Fehler im zweiten Subsystem befindet, muß eine Fehlerkorrektur für jede Version der gleichen Entwicklungsstufe extra programmiert werden.

Auch die Weiterentwicklung des Programmsystems auf eine neue Entwicklungsstufe ist erleichtert, wenn Weiterentwicklungen des Programmsystems immer vom ersten Subsystem ausgehen. Dies bedeutet, daß das zweite Subsystem bei jeder Entwicklungsstufe ausgehend vom weiterentwickelten ersten Subsystem neu angepaßt wird. Durch dieses Vorgehen wird vermieden, daß das im Verhältnis zum ersten Subsystem bereits geänderte zweite Subsystem nochmals geändert wird. Alle Länderprojekte einer Entwicklungsstufe setzen auf dem ersten Subsystem auf. Durch dieses Vorgehen wird vermieden, daß die Software für mehrere Länderversionen vermischt wird.

Bei einer Weiterbildung der Erfindung werden in einem Verzweigungstabelle des Programmsystems Startadressen der Softwarebausteine gespeichert. Vor dem Ausführen eines Softwarebausteins wird mit Hilfe einer Verzweigungstabelle die Startadresse des Softwarebausteins ermittelt. Die Weiterbildung der Erfindung geht von der Erkenntnis aus, daß die Kombination der Verwendung des ersten Subsystems und des zweiten Subsystems einerseits und das Verwenden einer Verzweigungstabelle andererseits dazu führt, daß sich die Trennung in erstes Subsystem und zweites Subsystem auf einfache Art durchführen läßt. Durch eine Änderung der Startadresse im Verzweigungstabelle läßt sich ein Softwarebaustein im ersten Subsystem oder ein Softwarebaustein im zweiten Subsystem auswählen. Dies erfolgt z.B. abhängig davon, ob der Softwarebaustein der länderspezifischen Software (Subsystem 2) oder der länderneutralen Software (Subsystem 1) zugehört. Die Einträge in der Verzweigungstabelle bestimmen somit nach Art eines Schalters, ob für das Ausführen einer bestimmten Funktion ein Softwarebaustein aus dem ersten Subsystem oder aus dem zweiten Subsystem verwendet werden soll.

Bei einer anderen Weiterentwicklung sind die Befehle des ersten Subsystems in Speicherzellen eines ersten zusammenhängenden Adreßbereiches des Speichers der Datenverarbeitungsanlage gespeichert. Durch diese Maßnahme erleichtert sich das Zuordnen der Speicherbausteine zum ersten Subsystem, weil nur noch ermittelt werden muß, ob der betreffende Softwarebaustein im ersten Adreßbereich gespeichert ist. Eine entsprechende Überlegung gilt, wenn die Befehle des zweiten Subsystems in Speicherzellen eines zweiten zusammenhängenden Adreßbereichs des Speichers gespeichert sind.

Bei einer Ausgestaltung der Erfindung werden in der Verzweigungstabelle für jedes Ereignis, welches beim Betrieb der Datenverarbeitungsanlage auftritt, jeweils die Startadressen des auszuführenden Softwarebausteins gespeichert. Abhängig von der Art des Ereignisses wird die Adresse der Speicherzelle ermittelt, in welcher die Startadresse des auszuführenden Softwarebausteins gespeichert ist.

Die Zuordnung von Ereignissen und Startadressen erfolgt somit auf einfache Weise, da beim Auftreten eines ersten Ereignisses nur die Startadresse aus der ersten Speicherzelle, beim Auftreten eines zweiten Ereignisses die Speicherzelle einer zweiten Adresse usw. gelesen werden müssen. Die Speicheradressen der Speicherzellen bilden vorzugsweise einen fortlaufenden Bereich. Die Ereignis-Nummer ist somit ein Index für den Zugriff auf die Verzweigungstabelle.

Vorzugsweise wird die Verzweigungstabelle im zweiten Subsystem untergebracht. So betreffen Änderungen in der Verzweigungstabelle das ohnehin zu ändernde zweite Subsystem. Das erste Subsystem bleibt weiterhin für alle Versionen einer Entwicklungsstufe gleich.

Bei einer nächsten Weiterbildung enthält das erste Subsystem mindestens einen Hilfs-Softwarebaustein für eine Funktion, für die das zweite Subsystem einen vom Hilfs-Softwarebaustein abweichenden Softwarebaustein enthält. Im Verzweigungstabelle ist die Adresse des abweichenden Softwarebausteins gespeichert, jedoch nicht die Adresse des Hilfs-Softwarebausteins. Der Hilfs-Softwarebaustein kann somit über das Verzweigungstabelle nicht aufgerufen werden. In der Regel wird der Hilfs-Softwarebaustein auch nicht durch den Prozessor ausgeführt. Der Hilfs-Softwarebaustein dient aber als Vergleichsbasis, wenn später festgestellt werden soll, wie eine bestimmte Funktion in der Grundversion einer Entwicklungsstufe programmiert worden ist. Durch die Weiterbildung werden zwar im ersten Subsystem Befehle gespeichert, die nicht ausgeführt werden, jedoch wird vermieden, daß sich durch das Streichen dieser Befehle Adressen verändern. Werden Fehler im ersten Subsystem korrigiert, so kann die Korrektur für alle Versionen der Entwicklungsstufe auf gleiche Art durchgeführt werden, indem an den gleichen Adressen mit den fehlerhaften Befehlen neue Befehle gespeichert werden. Das Einbringen der Korrektur kann durch ein Zusatzprogramm erfolgen, das eine Datenübertragungsverbindung zur Datenverarbeitungsanlage aufbaut. Die fehlerfreie Befehlsfolge wird englisch auch als Patch bezeichnet.

Ein weiterer Vorteil der Erfindung ist, daß Änderungen für Fehler in der projektneutralen Software (Subsystem 1) für alle Ländervarianten einer Entwicklungsstufe nur einmal behoben werden müssen (Subsystem 1) und somit in allen Ländervarianten gleichartig eingebracht werden können.

In einer Ausgestaltung wird das erfindungsgemäße Verfahren beim Betrieb einer Vermittlungsstelle eingesetzt. Die Softwarebausteine legen die Funktion der Vermittlungsstelle abhängig von einem Ereignis und abhängig von einem Schaltzustand der Vermittlungsstelle fest. Die Funktion eines Softwarebausteins läßt sich mit Hilfe eines sogenannten Zustands-Anreiz-Diagramms bzw. SDL-Diagramm (Specification and Description Language) beschreiben. Die Ausführung der Befehle eines Softwarebausteins beginnt in einem bestimmten Zustand und endet auch in einem bestimmten Zustand. Abhängig vom Anreiz bzw. Ereignis, wird ein dem betreffenden Zustand zugeordneter Softwarebaustein ausgewählt. Nach dem Ausführen der Befehle des ausgewählten Softwarebausteins befindet sich die Vermittlungsstelle wieder in einem bestimmten Zustand und wartet auf einen neuen Anreiz. Wird auch bei dieser Weiterbildung eine Verzweigungstabelle verwendet, so gibt es für jeden auftretenden Anreiz jedes Zustandes genau einen Eintrag in der Verzweigungstabelle.

Bei einer Ausgestaltung des in der Vermittlungsstelle eingesetzten erfindungsgemäßen Verfahrens enthalten die Softwarebausteine auch Sprungbefehle zum Aufrufen von Unterprogrammen. In der Verzweigungstabelle oder in einer zweiten Verzweigungstabelle werden auch die Startadressen der Unterprogramme vermerkt. Vor dem Aufrufen eines Unterprogramms wird mit Hilfe der Verzweigungstabelle die Startadresse des Unterprogramms ermittelt. Durch diese Maßnahmen können auch die Unterprogramme auf die Subsysteme aufgeteilt werden. Die oben für die Softwarebausteine erläuterten technischen Wirkungen gelten damit auch für die Unterprogramme.

Die Erfindung betrifft außerdem ein Computerprogramm und eine Datenverarbeitungsanlage zum Durchführen des Verfahrens nach der Erfindung, eine Baueinheit mit dieser Datenverarbeitungsanlage sowie eine Vermittlungsstelle, die eine solche Baueinheit enthält. Damit gelten die oben genannten technischen Wirkungen auch für diese Einrichtungen.

Im folgenden werden Ausführungsbeispiele der Erfindung an Hand der beiliegenden Zeichnungen erläutert. Darin zeigen:
- Figur 1: ein Zustands-Anreiz-Diagramm,
- Figur 2: Prinzipdarstellungen von Subsystemen in verschiedenen Versionen einer Entwicklungsstufe eines Programmsystems,
- Figur 3: in den Subsystemen enthaltene Softwarebausteine, und
- Figur 4: Entwicklungsstufen einer Grundversion und einer projektspezifischen Version.

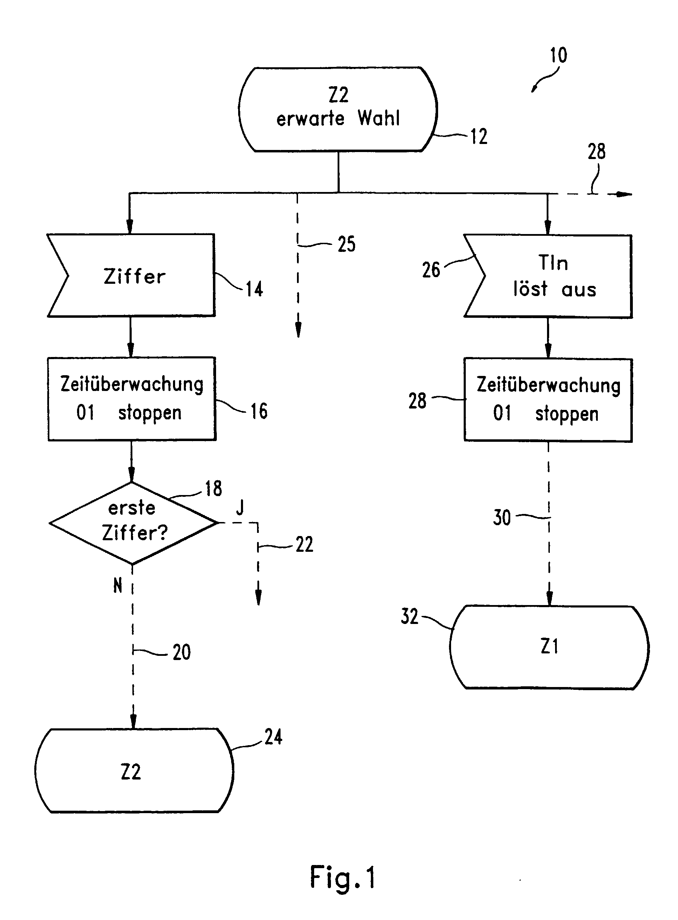

Figur 1 zeigt ein Zustands-Anreiz-Diagramm für den Aufbau einer Telekommunikationsverbindung zwischen zwei Teilnehmern. In einem Zustand Z2 wartet die in einem Anwenderprogramm festgelegte Signalisierungsbearbeitung einer Vermittlungsstelle auf die Wahl des Teilnehmers, vgl. Verfahrensschritt 12. Wird im Zustand Z2 eine Ziffer von der Vermittlungsstelle empfangen, so wird diese an die Verbindungssteuerung zur weiteren Auswertung ausgegeben, vgl. Schritt 14.

Nach dem Schritt 14 wird eine Zeitüberwachung mit der Nummer "01" angehalten, vgl. Schritt 16. Anschließend werden abhängig davon, ob es sich bei der empfangenen Ziffer um die erste Ziffer handelt oder ob eine der ersten Ziffer nachfolgende Ziffer empfangen worden ist, weitere Schritte ausgeführt, um das Ereignis "Ziffer empfangen" zu bearbeiten, vgl. Schritt 18. Diese Schritte sind durch gestrichelte Pfeile 20 und 22 angedeutet. Nach dem Ausführen dieser Schritte wird die Vermittlungsstelle wieder in den Zustand Z2 zurückgesetzt, vgl. Verfahrensschritt 24.

Neben dem an Hand der Verfahrensschritte 14 bis 24 erläuterten Regelablauf werden noch weitere Ereignisse im Zustand Z2 berücksichtigt. Beispielsweise kann der rufende A-Teilnehmer vor der Wahl wieder auflegen, vgl. Schritt 26. Andere im Zustand Z2 zu bearbeitende Ereignisse sind in Figur 1 nur angedeutet, vgl. Pfeil 25. Zu diesen Ereignissen gehört der Ablauf der Zeitüberwachung "01", falls der Teilnehmer nicht innerhalb einer Zeitgrenze wählt. Weiterhin muß im Zustand Z2 von der Verbindungssteuerung das Wahlende erkannt werden.

Nach dem Verfahrensschritt 26 wird die Zeitüberwachung zurückgesetzt, vgl. Verfahrensschritt 28. Weitere Verfahrensschritte, wie das Abschalten des Wahlempfängers und das Abschalten des Wähltones, sind in Figur 1 durch einen gestrichelten Pfeil 30 angedeutet. Nach der Bearbeitung des Ereignisses "Teilnehmer löst aus", vgl. Schritt 26, wird die Signalisierungsbearbeitung für den betrachteten Teilnehmeranschluß in einen Zustand Z1 gesetzt, vgl. Schritt 32. Dies ist der Ruhezustand, in welchem das Anwenderprogramm auf eintreffende Nachrichten von anderen Funktionseinheiten, z.B. von der Verbindungssteuerung, oder vom Teilnehmer wartet.

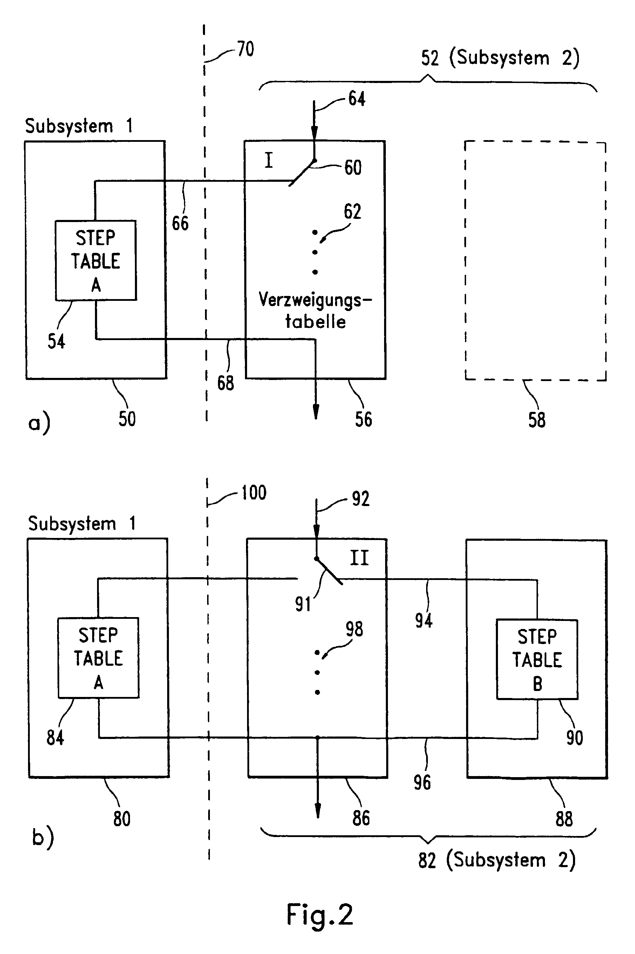

Teil a der Figur 2 zeigt eine Prinzipdarstellung von Subsystemen 50 und 52 der Grundversion eines Programmsystems für ein Anwenderprogramm in der Vermittlungsstelle. Das Subsystem 50 ist bei allen Versionen einer Entwicklungsstufe des Programmsystems gleich. Es enthält als Softwarebausteine sogenannte STEP TABLES (Schrittabelle), von denen im Teil a der Figur 2 eine STEP TABLE 54 gezeigt ist. Die STEP TABLES enthalten die Verfahrensschritte, die bei einem bestimmten Anreiz in einem bestimmten Zustand auszuführen sind. So enthält die STEP TABLE 54 Befehle, die von einem Prozessor abgearbeitet werden, um die Verfahrensschritte 14 bis 24 auszuführen, vgl. auch Figur 1. Der Prozessor befindet sich auf einer Anschlußbaugruppe, welche die Schnittstelle zum Anschluß externer Leitungen an die Vermittlungsstelle bildet.

Das Subsystem 52 enthält ein Verzweigungstabelle 56 sowie einen Programmteil 58. Das Subsystem 50 mit Programmteilen, die für alle Versionen einer Entwicklungsstufe gleich sind, wird auch als Subsystem 1 bezeichnet. Der Programmteil 58 enthält Programmteile, die abhängig von der jeweiligen Version einer Entwicklungsstufe sind. Er wird deshalb auch als individuelles Subsystem 2 bezeichnet. Die Grundversion einer Entwicklungsstufe hat keine individuellen Programmteile. Deshalb ist der Programmteil 58 leer und als gestrichelte Linie dargestellt.

Die Verzweigungstabelle 56 enthält Einträge für Startadressen, an denen STEP TABLES beginnen. Im Teil a der Figur 2 ist ein solcher Eintrag dargestellt, vgl. Bezugszeichen 60. Weitere Einträge sind durch drei Punkte 62 angedeutet. Der Eintrag 60 wird ausgewertet, wenn im Zustand Z2 eine Ziffer empfangen wird, vgl. Pfeil 64 sowie Figur 1. Der Prozessor liest den Eintrag 60 und setzt die Bearbeitung an derjenigen Adresse fort, die im Eintrag 60 gespeichert ist. Dies ist die Startadresse der STEP TABLE 54, vgl. Pfeil 66. Beim Ausführen der Befehlsfolge der STEP TABLE 54 werden, wie bereits erwähnt, die Verfahrensschritte 14 bis 24, vgl. Figur 1, ausgeführt. Danach wird in den Zustand Z2 zurückgekehrt, vgl. Pfeil 68.

Eine Strichlinie 70 verdeutlicht die Trennung des Programmsystems in die beiden Subsysteme 50 und 52. Die Einträge 60, 62 im Verzweigungstabelle 56 haben die Funktion von Schaltern, mit denen wahlweise STEP TABLES aus dem Subsystem 50 oder aus dem Subsystem 52 ausgewählt werden können. In der Grundversion verweisen sämtliche Einträge in der Verzweigungstabelle 56 auf STEP TABLES im Subsystem 50, vgl. Schalterstellung I.

Teil b der Figur 2 zeigt eine Prinzipdarstellung von Subsystemen 80 und 82 eines Anwenderprogramms für eine andere Ländervariante derselben Entwicklungsstufe des Programmsystems. Beispielsweise ist das in Teil b der Figur 2 gezeigte Anwenderprogramm für ein Telekommunikationsnetz eines anderen Betreibers geeignet.

Das Subsystem 80 (Subsystem 1) ist eine Kopie des Subsystems 50 der Grundversion. Somit enthält das Subsystem 80 auch eine STEP TABLE 84, die mit der STEP TABLE 54 übereinstimmt.

Das Subsystem 82 (Subsystem 2) enthält wie das Subsystem 52 ebenfalls eine Verzweigungstabelle 86 sowie einen Programmteil 88. Es sei angenommen, daß bei einem Telekommunikationssystem eines anderen Betreibers beim Auftreten einer Ziffer im Zustand Z2 andere Verfahrensschritte ausgeführt werden müssen, als in Figur 1 gezeigt. Die Befehlsfolge der STEP TABLE 84 kann deshalb nicht verwendet werden. Eine Befehlsfolge, die für das andere Telekommunikationsnetz programmiert worden ist, ist in einer STEP TABLE 90 gespeichert, die Teil des individuellen Programmteils 88 ist. Ein Eintrag 91 in der Verzweigungstabelle 86 wird vom Prozessor gelesen, wenn im Zustand Z2 eine Ziffer empfangen wird. Der Eintrag 91 steht in der Verzweigungstabelle 86 an der gleichen Stelle wie der Eintrag 60 im Verzweigungstabelle 56. Jedoch verweist der Eintrag 91 auf die STEP TABLE 90 im Programmteil 88 des Subsystems 82. Dies hat zur Folge, daß der Prozessor im Zustand Z2 beim Empfangen einer Ziffer den Eintrag 91 liest, vgl. Pfeil 92. Die Bearbeitung wird an der Adresse fortgesetzt, die im Eintrag 91 gespeichert ist. Dies ist die Startadresse der STEP TABLE 90, vgl. Pfeil 94. Nach dem Abarbeiten der Befehlsfolge der STEP TABLE 90 wird das Anwenderprogramm in den Zustand Z1 gesetzt, vgl. Pfeil 96.

Somit wirkt auch der Eintrag 91 wie ein Schalter, mit dem zwischen der STEP TABLE 84 und der STEP TABLE 90 umgeschaltet werden kann. Im Teil b der Figur 2 befindet sich der "Schalter" in einer Schalterstellung II, die auf eine STEP TABLE im Subsystem 82 zeigt.

In der Verzweigungstabelle 86 gibt es neben dem Eintrag 91 weitere Einträge 98, die durch drei Punkte angedeutet sind. Ein Teil der Einträge 91, 98 in der Verzweigungstabelle 86 verweist auf STEP TABLES im Subsystem 80 und der andere Teil der Einträge 91, 98 verweist auf STEP TABLES im Subsystem 82.

Eine Strichlinie 100 verdeutlicht im Teil b der Figur 2 die Trennung der Subsysteme 80 und 82. Diese Trennung 100 soll verdeutlichen, daß es auch in anderen Versionen der gleichen Entwicklungsstufe jeweils das Subsystem 80 gibt. Unterschiede bestehen jedoch auf der Seite des Subsystems 82. So gibt es für jedes Projekt eine eigene Verzweigungstabelle und einen eigenen individuellen Programmteil.

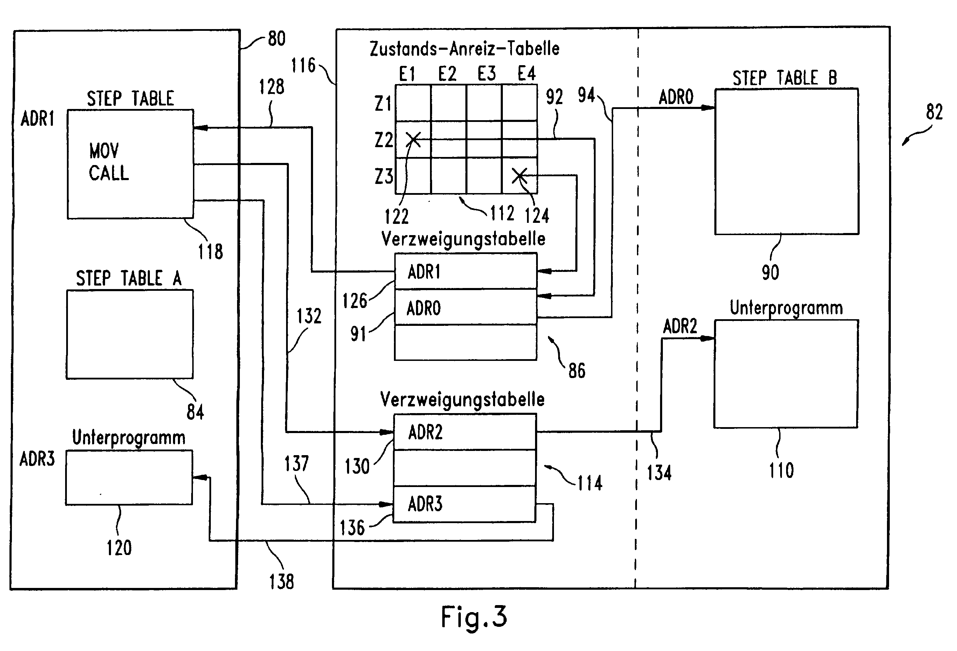

Figur 3 zeigt in den Subsystemen 80 und 82 enthaltene Verzweigungstabellen und STEP TABLES. Im individuellen Programmteil 88 des Subsystems 82 ist neben der STEP TABLE 90 noch ein Unterprogramm 110 dargestellt. Das Subsystem 82 enthält neben der Verzweigungstabelle 86 noch eine Zustands-Anreiz-Tabelle 112 sowie eine zweite Verzweigungstabelle 114. Die Zustands-Anreiz-Tabelle 112 und die Verzweigungstabellen 86 und 114 sind in einem Subsystem 116 des Programmsystems 82 zusammengefaßt. Im Subsystem 80 sind neben der STEP TABLE 84 noch eine STEP TABLE 118 und ein Unterprogramm 120 dargestellt.

In der Zustands-Anreiz-Tabelle 112 sind Speicheradreßwerte gespeichert, die bestimmten Zuständen Z1, Z2 und Z3 sowie bestimmten Ereignissen E1, E2, E3 und E4 zugeordnet sind. Die Zuordnung wird durch eine Matrixdarstellung angedeutet, bei der die Zustände Z1, Z2 und Z3 jeweils einer Zeile zugeordnet sind und die Ereignisse E1, E2, E3 und E4 jeweils einer Spalte. Im Schnittpunkt der entsprechenden Zeile und der entsprechenden Spalte ist der Speicheradreßwert gespeichert. Beispielsweise ist dem Ereignis E1, das im Zustand Z2 eine Ziffer empfangen wird, der erste Speicherwert der zweiten Zeile in der Zustands-Anreiz-Tabelle 112 zugeordnet, vgl. Bezugszeichen 122. In diesem Feld der Zustands-Anreiz-Tabelle ist die Adresse einer Speicherzelle vermerkt, in der der Eintrag 91 gespeichert ist, vgl. Pfeil 92. Der Eintrag 91 enthält seinerseits einen Adreßwert ADR0, an welchem die STEP TABLE 90 beginnt, vgl. Pfeil 94. Die Bearbeitung des Ereignisses E1 im Zustand Z2 wurde oben an Hand des Teils b der Figur 2 bereits erläutert.

Weiterhin ist in der Zustands-Anreiz-Tabelle 112 ein Feld 124 gekennzeichnet, das durch den Prozessor gelesen wird, wenn im Zustand Z3 das Ereignis E4 auftritt. Das Feld 124 enthält den Speicheradreßwert eines Eintrags 126 der Verzweigungstabelle 86. Im Eintrag 126 ist eine Adresse ADR1 gespeichert, welche die Startadresse der Befehlsfolge der STEP TABLE 118 ist, vgl. Pfeil 128. In der STEP TABLE 118 sind Assemblerbefehle angedeutet. MOV beschreibt einen Verschiebebefehl, mit dem Daten von einer Speicheradresse gelesen und in eine andere Speicheradresse geschrieben werden. CALL kennzeichnet einen Sprungbefehl, mit dem bei der Abarbeitung der Befehle in der STEP TABLE 118 zu einem Unterprogramm verzweigt wird.

So wird bei einem ersten Unterprogrammaufruf beim Abarbeiten der Befehle der STEP TABLE 118 zunächst ein Eintrag 130 in der Verzweigungstabelle 114 gelesen, vgl. Pfeil 132. Im Eintrag 130 ist ein Adreßwert ADR2 gespeichert, der die Anfangsadresse der Befehle des Unterprogramms 110 angibt. Danach wird die Befehlsabarbeitung an der Adresse ADR2 mit den Befehlen des Unterprogramms 110 fortgesetzt. Der Aufruf des Unterprogramms erfolgt somit mit Hilfe der Verzweigungstabelle 114. Nach dem Abarbeiten der Befehle des Unterprogramms 110 wird die Bearbeitung in der STEP TABLE 118 fortgesetzt mit dem Befehl, der nach dem Befehl für den Aufruf des Unterprogramms liegt. Das Unterprogramm 110 ist im Subsystem 82 gespeichert, weil es für verschiedene Versionen unterschiedliche Unterprogramme 110 gibt.

Beim Abarbeiten der Befehle der STEP TABLE 118 erfolgt danach ein Unterprogrammaufruf des Unterprogramms 120. Dabei wird zunächst ein Eintrag 136 in der Verzweigungstabelle 114 gelesen, vgl. Pfeil 137. Im Eintrag 136 ist ein Adreßwert ADR3 gespeichert, der die Startadresse der Befehle des Unterprogrammsl (120) angibt. Der Aufruf des Unterprogramms (120) erfolgt somit mit Hilfe des Eintrags 136, vgl. Pfeil 138. Nach dem Abarbeiten der Befehle des Unterprogramms (120) wird die Bearbeitung in der STEP TABLE 118 fortgesetzt. Das Unterprogramm 120 ist im Subsystem 80 enthalten, weil es für alle Versionen einer Entwicklungsstufe gleich ist.

Somit wird mit Hilfe der Verzweigungstabelle 114 eine Auswahl zwischen Unterprogrammen im Subsystem 80 bzw. im Subsystem 82 getroffen. Während die Verzweigungstabelle 86 eine Auswahl zwischen STEP TABLES trifft, wird also in der Verzweigungstabelle 114 eine Auswahl zwischen Unterprogrammen innerhalb einer STEP TABLE getroffen.

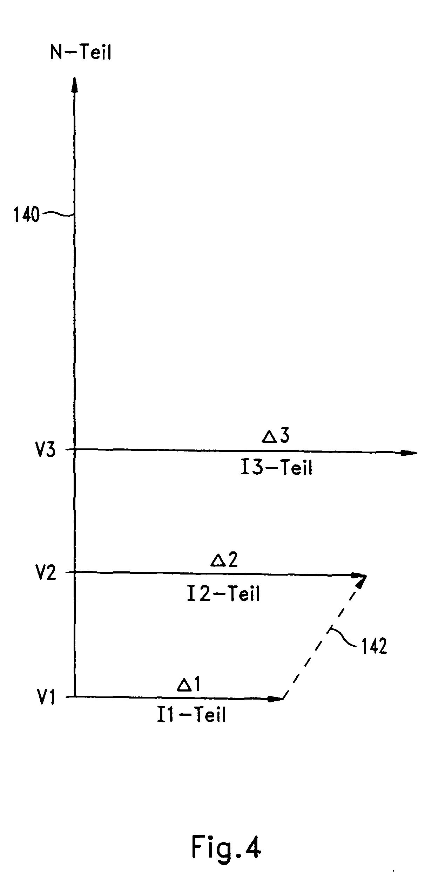

Figur 4 zeigt auf einer senkrechten Achse 140 abgetragene Entwicklungsstufen V1, V2 und V3 einer Grundversion des Signalisierungsprogramms. Dabei sei angenommen, daß die Version V2 zehn Leistungsmerkmale mehr enthält als die Grundversion V1. Die Grundversion V3 enthält wiederum zehn Leistungsmerkmale mehr als die Grundversion V2. In waagerechter Richtung sind in Figur 4 für die verschiedenen Entwicklungsstufen die individuellen Programmteile der Länderversion dargestellt. Ein länderspezifischer Programmteil I1 unterscheidet sich von der Grundversion V1 um ein Δ1.

Bei der Programmierung eines länderspezifischen Programmteils I2 für die Version V2 wird von der Grundversion V2 ausgegangen, indem Unterschiede Δ2 zwischen der Grundversion V2 und dem individuellen Programmteil I2 programmiert werden. Eine Änderung des I1-Teiles direkt in den I2-Teil findet nicht statt, vgl. Pfeil 142. Dadurch wird vermieden, daß der bereits geänderte I1-Teil nochmals geändert werden muß. Ein individueller Programmteil I3 der Version V3 wird wiederum ausgehend von der Grundversion V3 erstellt, indem Änderungen A3 ausgehend von der Grundversion V3 programmiert werden.

Durch das Verwenden von gemeinsamen Subsystemen und individuellen Subsystemen wird erreicht, daß Änderungen von Änderungen bzw. mehrfache Änderungen von Änderungen vermieden werden. Das Erstellen, die Weiterentwicklung und die Pflege des Signalisierungsprogramms vereinfacht sich beträchtlich.

In der Mehrheit der Fälle, in denen eine Änderung durchzuführen ist, können Patche im Subsystem 1 unverändert weltweit eingebracht werden. Nur wenn ein Patch einen Programmteil betrifft, der in dem bestimmten Projekt durch einen Teil im Subsystem 2 ersetzt wurde, so ist ein zweiter Patch zu erstellen, welcher die Funktionalität des ersten Patches in den Teil des Subsystems 2 umsetzt. Fälle, in denen ein zweiter Patch zu erstellen ist, treten aber relativ selten auf, weil das Subsystem 2 wesentliche weniger Befehle enthält als das Subsystem 1.

## Patentansprüche

1. Verfahren zum Betreiben einer Datenverarbeitungsanlage, bei dem mindestens ein Prozessor die Befehle eines Programmsystems ausführt,
das Programmsystem mindestens zwei Subsysteme (80, 82) enthält, die vorgegebene Funktionen der Datenverarbeitungsanlage festlegen und im wesentlichen voneinander unabhängig produzierbar sind,
die Subsysteme (80, 82) Softwarebausteine (90, 118) zum Ausführen einer Funktion oder einer Teilfunktion enthalten,
das erste Subsystem (80) Softwarebausteine (118) für Funktionen enthält, die im Programmsystem und in einer anderen Version dieses Programmsystems gleich auszuführen sind, und bei dem das zweite Subsystem (82) Softwarebausteine (90) für Funktionen enthält, die in beiden Programmsystemen unterschiedlich auszuführen sind.

2. Verfahren nach Anspruch 1, **dadurch gekennzeichnet**, daß in einer Verzweigungstabelle (86) des Programmsystems Startadressen (ADR0, ADR1) der Softwarebausteine (90, 118) gespeichert sind,
und daß vor dem Ausführen der Befehle eines Softwarebausteins (90, 118) mit Hilfe der Verzweigungstabelle (86) die Startadresse (ADR0, ADR1) des Softwarebausteins (90, 118) ermittelt wird.

3. Verfahren nach einem der vorhergehenden Ansprüche, **dadurch gekennzeichnet**, daß die Befehle des ersten Subsystems (80) in Speicherzellen eines ersten Adreßbereiches des Speichers der Datenverarbeitungsanlage gespeichert sind,
und/oder daß die Befehle des zweiten Subsystems (82) in Speicherzellen eines zweiten Adreßbereiches des Speichers gespeichert sind.

4. Verfahren nach einem der vorhergehenden Ansprüche, **dadurch gekennzeichnet**, daß in der Verzweigungstabelle (86) zu verschiedenen Ereignissen (E1 bis E4), die beim Betrieb der Datenverarbeitungsanlage auftreten, jeweils die Startadresse (ADR1 bis ADR3) des beim Auftreten des Ereignisses (E1 bis E4) auszuführenden Softwarebausteins (90, 118) in der Speicherzelle eines Speichers der Datenverarbeitungsanlage gespeichert ist,
und daß abhängig von der Art des Ereignisses (El bis E4) die Adresse der Speicherzelle (90, 126) ermittelt wird, in welcher die Startadresse (ADR1, ADR2) des auszuführenden Softwarebausteins (90, 118) gespeichert ist.

5. Verfahren nach einem der vorhergehenden Ansprüche, **dadurch gekennzeichnet**, daß die Verzweigungstabelle (86) Teil des zweiten Subsystems (82) ist.

6. Verfahren nach einem der vorhergehenden Ansprüche, **dadurch gekennzeichnet**, daß das erste Subsystem (80) mindestens einen Hilfs-Softwarebaustein (84) für eine Funktion enthält, für die das zweite Subsystem einen vom Hilfs-Softwarebaustein (84) abweichenden Softwarebaustein (90) enthält,
und daß in der Verzweigungstabelle (86) die Adresse (ADR0) des abweichenden Softwarebausteins (90), jedoch nicht die Adresse des Hilfs-Softwarebausteins (84) gespeichert ist.

7. Verfahren nach einem der vorhergehenden Ansprüche, **dadurch gekennzeichnet**, daß es in einer Vermittlungsstelle verwendet wird,
und daß die Softwarebausteine (90, 118) die Funktion der Vermittlungsstelle abhängig von einem Ereignis (E1 bis E4) und abhängig von einem Schaltzustand (Z1 bis Z3) der Vermittlungsstelle festlegen.

8. Verfahren nach Anspruch 7, **dadurch gekennzeichnet**, daß mindestens ein Softwarebaustein (80) Sprungbefehle zum Aufrufen eines Unterprogramms (110) enthält,
in der Verzweigungstabelle (114) die Startadresse (ADR2) des Unterprogramms (110) vermerkt ist,
und daß vor dem Ausführen des Unterprogramms (110) mit Hilfe der Verzweigungstabelle (114) die Startadresse (ADR2) des Unterprogramms (110) ermittelt wird.

9. Datenverarbeitungsanlage zum Durchführen des Verfahrens nach einem der vorhergehenden Ansprüche,
mit einem Speicher zum Speichern der Befehle eines Programmsystems, das mindestens zwei Subsysteme (80, 82) enthält, die vorgegebene Funktionen der Datenverarbeitungsanlage festlegen und im wesentlichen unabhängig voneinander produzierbar sind, in den Subsystemen (80, 82) enthaltenen Softwarebausteinen (90, 118) zum Ausführen einer Funktion oder einer Teilfunktion,
mindestens einem Prozessor zum Ausführen der Befehle, und mit einer im Speicher gespeicherten Verzweigungstabelle (86), in der die Startadressen (ADR1, ADR2) der Softwarebausteine (90, 118) gespeichert sind,
**dadurch gekennzeichnet**, daß das erste Subsystem (80) Softwarebausteine (118) für Funktionen enthält, die im Programmsystem und in einer anderen Version dieses Programmsystems gleich auszuführen sind, und daß das zweite Subsystem (82) Softwarebausteine (90) für Funktionen enthält, die in beiden Programmsystemen unterschiedlich auszuführen sind.

10. Baueinheit für eine Vermittlungsstelle, **gekennzeichnet durch** eine Datenverarbeitungsanlage nach Anspruch 9.

11. Vermittlungsstelle, **gekennzeichnet durch** eine Baueinheit nach Anspruch 10.

12. Computerprogramm mit einer durch den Prozessor eines Computers ausführbaren Befehlsfolge, **dadurch gekennzeichnet**, daß der Computer beim Ausführen der Befehlsfolge veranlaßt wird, die Schritte nach einem der Patentansprüche 1 bis 8 durchzuführen.
